(19)

Europäisches
Patentamt

European
Patent Office

Office européen
des brevets

(11) **EP 4 475 053 A1**

(12) **EUROPEAN PATENT APPLICATION**

(43) Date of publication:
**11.12.2024 Bulletin 2024/50**

(21) Application number: **23201619.6**

(22) Date of filing: **04.10.2023**

(51) International Patent Classification (IPC):
**G06Q 10/0635** (2023.01)     **G06Q 40/06** (2012.01)

(52) Cooperative Patent Classification (CPC):
**G06Q 10/0635; G06Q 40/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.06.2023 HK 32023074332**

(71) Applicant: **Digital Tools Company Limited Hong Kong (HK)**

(72) Inventors:
• **Fu Yeung To, Dominic**
  **Hong Kong (HK)**
• **Fu Chi Kwong, Joseph**
  **Hong Kong (HK)**

(74) Representative: **Cabinet Chaillot**
**16/20, avenue de l'Agent Sarre**
**B.P. 74**
**92703 Colombes Cedex (FR)**

(54) **A METHOD OF USER-GUIDED RISK PRIORITIZATION IN A PROCESS AND A SYSTEM THEREFOR**

(57)     A method of prioritising risks in a production process, manufacturing process or electronic financial process, comprising the steps of: retrieving risk factors from a data storage component; presenting a subset of these risk factors to the user on a user-interactive display; enabling the user to arrange the risk factors in the subset according to perceived priority; and aggregating the user-guided prioritizations across multiple subsets to establish an overall prioritization of risk factors for the process.

100

Figure 1

EP 4 475 053 A1

**Description**

**Field of Invention**

The present invention relates to devices and systems providing risk assessment or management of complex operations.

**Background of the invention**

Enterprises operate within and interact with various external environments, including manufacturing, business, financial, and market factors. To address challenges and adapt to unexpected occurrences, manufacturing plants and organizations establish rules and procedures that guide the actions or the operators in their responses to external events. Among the more common frameworks adopted by the industry are ISO 31000 and COSO. The areas of risk could be in over storage of corrosive chemicals, insufficient change of air in a biological hazard cabinet or even over-exposure to investment instrument in a bank.

Certain tools have been developed to facilitate this process, commonly and collectively referred to as Enterprise Risk Management (ERM).

ERM involves the identification, assessment, and preparation for potential dangers, hazards, and other threats-both physical and financial-that may disrupt an organization's operations and objectives. By implementing ERM, managers can influence the firm's overall risk position by directing specific business segments to engage in or avoid certain activities.

Enterprises face a wide range of risks, such as financial, competitive, environmental, reputational, and political or economic risks. Additional examples include compliance risk, cybersecurity risk, currency fluctuations, maintaining a consistent customer pipeline, trusting business partners or key employees, sacrificing private capital, and investing personal time and health.

To effectively manage these risks and mitigate potential damages, risks should be broken down into smaller, more manageable events. For instance, the risk of bankruptcy can result from the accumulation of liquidity risk, exchange risk, loss of customer pipeline risk, supply chain risk, and other operational risks.

Currently, market tools enable enterprises to create a risk register (RR), which is a document or database containing potential risks and corresponding response plans. Common components of a risk register include:

- Risk description
- Risk owner
- Risk likelihood
- Risk impact
- Risk rating
- Risk response plan

Different types of enterprises, such as retail shops, consumer banks, and estate management companies, have distinct risk registers. Even enterprises within the same market segment may have variations in their risk registers due to factors such as shareholder structure, organizational history, and culture, which affect risks related to human resources and staff turnover.

Many ERM solutions available in the market do provide templates as a reference. However, organizations often find it difficult to adapt these templates when starting to adopt ERM, due to the unique nature of individual companies' size, geographic location, nature of business, and position in the supply chain. The adaptation process is heavily dependent on the experience of the staff responsible for its development.

A typical process for creating a risk register involves the following steps:

1. Risk Planning: Develop a plan that includes probability and impact tables, risk tolerance, and other relevant factors.
2. Risk identification: Describe the risk, its trigger, and possible consequences on scope, schedule, and budget.
3. Risk evaluation: Assess a risk's probability of occurrence (risk likelihood) and the severity of its consequences (risk impact) should it be realized. Multiply a risk's probability and impact to provide its expected value or risk rating. Prioritize risks according to their risk ratings. Address all risks with risk ratings exceeding the organization's risk tolerance.
4. Risk response: Develop responses to unacceptable risks to make them acceptable.
5. Risk monitoring and control: Track planned risk responses to ensure corrective actions are occurring and have the desired effect. Continually update the register as necessary.

One of the prior art adopted the use of Microsoft Excel spreadsheet to list and update entries of RR. The build-up of the RR is based on some personal experience, corporate knowledge or making reference to government and / or industrial standard such as the standard provided by Ministry of Advanced Education and Labour Market Development of the Government of British Columbia, Canada "Risk management guide" (https://www2.gov.bc.ca/assets/gov/education/post-secondary-education/institution-resources-administration/capital-planning/risk_management_guide.pdf).

Further, another prior art that exist in the market in the form of a software ERM platform from Riskonnect. The Riskonnect ERM is a cloud based platform that store and manage RR, the platform also provide templates for different industries, for example healthcare, or different aspects of business, including Internal Audit, Compliance.

The reference, system and method are environment created to help enterprise to prioritize and manage risk. They support methods for risk analysis and evaluation in enterprise risk management, the process can be viewed as a series of conversions, ultimately distilling complex "Risk realities" into numerical values for prioritization. This conversion process involves transforming the actual "Risk realities" into a detailed risk description, and then further converting that description into a single numerical metric. However, this approach can lead to a significant loss of valuable information about the risks and their potential impacts for several reasons:

1. Precision of risk descriptions: Prior art methods emphasize the need for detailed and precise risk descriptions, which may not fully capture the nuances of the actual "Risk realities." As users focus on articulating risks in a specific manner, they may inadvertently omit important aspects or subtle elements of the risk.

2. Arbitrary scales: When converting risk descriptions into numerical values for prioritization, prior art methods rely on arbitrary scales that may not accurately represent the true nature of the risk. The use of predetermined scales can oversimplify complex risks and force users to fit them into predefined categories. This can lead to misrepresentation of the risks and a loss of important information, as the scales may not account for the unique circumstances or context of the organization.

3. Difficulty for non-experts: The conversion process, including the use of arbitrary scales and precise risk descriptions, can be challenging for non-experts, who may not have the necessary background or expertise to accurately assess risks. This can result in inaccuracies and misunderstandings, as well as a loss of valuable insights that domain experts may possess but struggle to convey within the constraints of the prior art methods.

4. Rigidity: Prior art methods can be rigid, with little room for adjustments as an organization grows or evolves. As a result, the predetermined scales and risk descriptions may become outdated or irrelevant, leading to inaccurate assessments and a loss of important information about the risks and their potential impacts on the organization.

5. Limited engagement: The complexity of prior art methods can limit the engagement of employees within the organization. As individuals struggle to navigate the conversion process and adhere to the strict requirements of risk descriptions and arbitrary scales, they may become disengaged or disinterested in the risk management process, leading to a loss of valuable input and diverse perspectives.

The present invention seeks to address the limitations of prior art methods by providing an intuitive risk prioritization method for enterprise risk management that eliminates the need for arbitrary scales, precise risk descriptions, and the conversion of risk descriptions into numerical values.

**Summary of the Invention**

In a first aspect, the invention proposes a method of prioritising risks in a production process, manufacturing process or electronic financial process, comprising the steps of: retrieving risk description and related information (risk factors) from a data storage component; presenting a subset of these risk factors to a user on a user-interactive display; enabling the user to arrange the risk factors in the subset according to perceived priority, thereby establishing a relative priority within the subset; and aggregating the user-guided relative prioritizations across multiple subsets to establish an overall relative prioritization of risk factors for the process.

Preferably, the method further comprises the steps of: obtaining contextual information from different users, the contextual information including the role, expertise, and other relevant factors of each user, which may help the system to determine the risks to be displayed to the user, assess the credibility of the information provided by each user, and perform other functions; and storing this contextual information into the data storage component as risk factors.

Preferably, the method further comprises the steps of: selecting a subset of risk factors as anchor risk factors; assigning action groups to the anchor risk factors for managing the anchor risk factors.

Preferably, the method further comprises the steps of: classifying non-anchor risk factors by based on the most similar anchor risk factors.

Preferably, the method further comprises the steps of: obtaining user feedback; updating risk factor priorities and action groups based on the feedback, including updates to anchor risk factors, anchor risk factor action groups, and non-anchor risk factor action groups.

Preferably, the method further comprises the steps of: generating a risk register with the latest risk order and action groups.

In a second aspect, the invention proposes a system comprising: 1) a data processing component; 2) a user interface for user input; and 3) a data storage component; the data processing component configured to carry out the steps in the method as described.

**Brief description of the Figures**

It will be convenient to further describe the present invention with respect to the accompanying drawings that illustrate possible arrangements of the invention, in which like integers refer to like parts. Other arrangements of the invention are possible, and consequently the particularity of the accompanying drawings is not to be understood as superseding the generality of the preceding description of the invention.

Figure 1 is a schematic illustration of the components of a system of an embodiment of the invention;

Figure 2 is a schematic illustration of a Dynamic risk prioritization and classification system: Functional block diagram according to an embodiment of the invention;

Figure 3a is a schematic illustration of a Dynamic risk prioritization and classification system Process flow according to an embodiment of the invention;

Figure 3b illustrates how a simple set of instructions is displayed in the embodiment of Figure 1; and

Figure 4 to Figure 16 shows a possible user interface for operating the embodiment of Figure 1, Figure 2 and Figure 3a.

**Detailed description of specific embodiments**

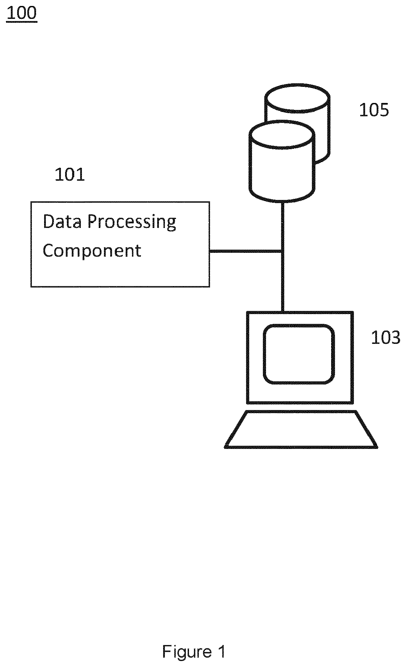

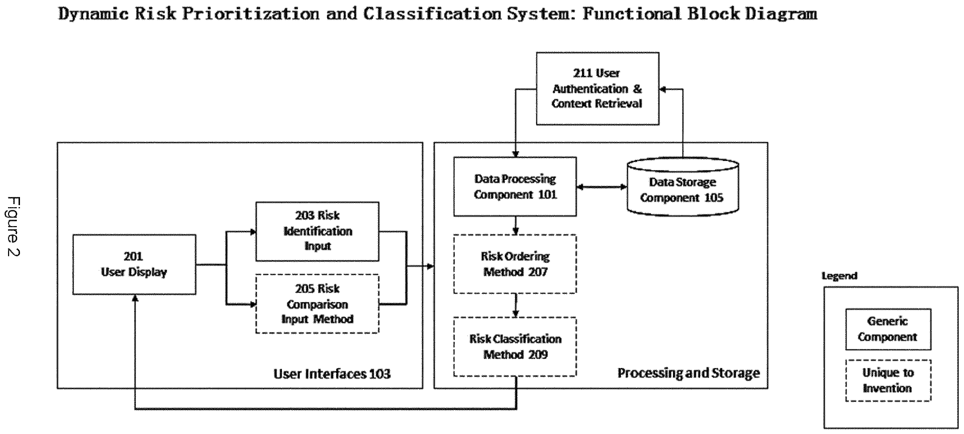

Figure 1 shows an embodiment, which comprises a system that enables operators of a complex process or operation to carry out risk assessment and management of the process or operation. The process can be highly technical, such as a manufacturing plant for products but can also be implemented for less technical operations such as banking. Figure 2 shows the same schematic but in greater detail, including the methods executable by the system.

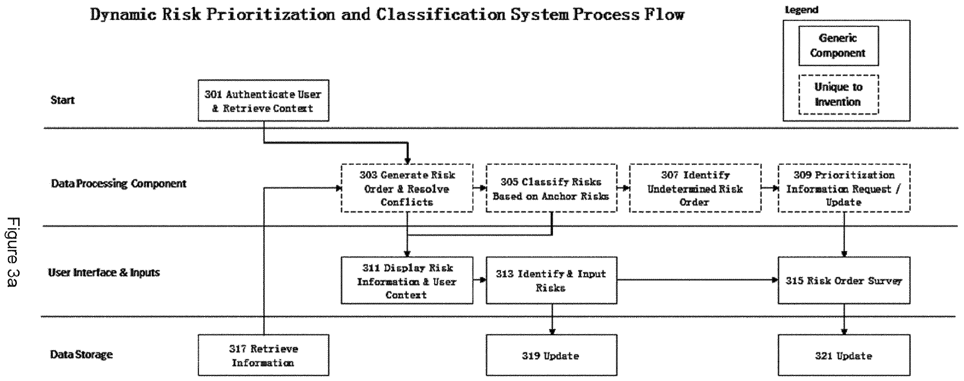

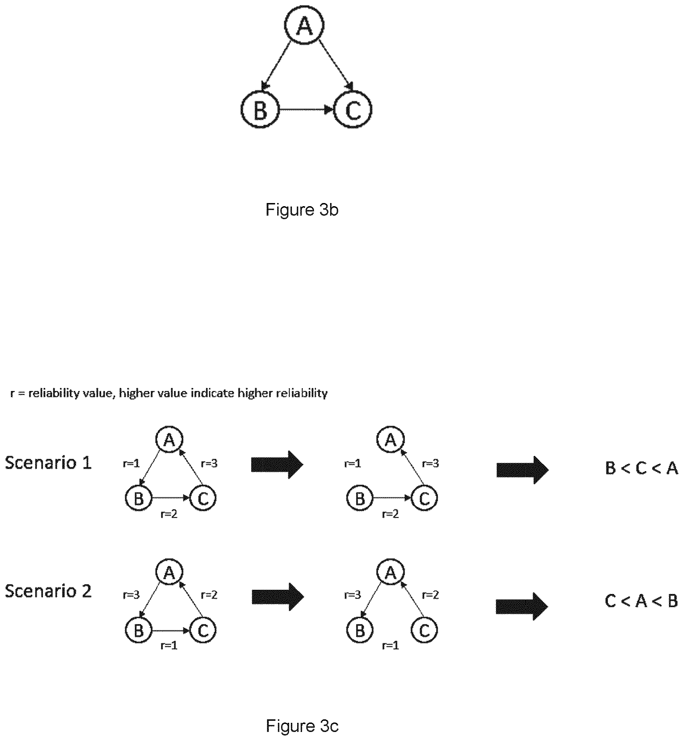

In particular, the system provides operators of a complex process a method of risk assessment and management, which may be called The Scale-free relative risk assessment and prioritization method, which is illustrated in Figure 3.

**The Specialized Tool**

The Specialized Tool 100 displays existing risk factor information and user context. To process risk factor data, the system comprises a Specialized Tool 100 with three main components as shown in Figure 1: 1) a data processing component 101, 2) a user interface 103 for user input, and 3) a data storage component 105.

During operation, the Specialized Tool 100 launches and initializes the three main components: the data processing component 101, the user interface 103, and data storage component 105.

The user interface 103 comprises a user display 201 (a display for the user), which allows the user to input identified risks factors, at 203, interact with the risk comparison input method, at 205, enabling the user to compare and prioritize a subset of the identified risk factors.

All these input is submitted fed to the data processing component 101 which analyses the input according to a risk factors ordering method 207 and a risk factors classification method 209 (described in greater detail in the following paragraphs), or directly to the data storage component 105.

A user authentication and context retrieval method 211 is used to allow the data processing component 101 to retrieve relevant data from the data storage component 105, which can then be re-analysed together with any new input.

In use, the Specialized Tool 100 first authenticates the user, at 301, and retrieves from the data storage component 105 the user's role and associated permissions within the organization or manufacturing plant, at 317. Specifically, the Specialized Tool 100 retrieves existing risk factor information relevant to the user's role from the data storage component 105, the organization's objectives and any other contextual information associated with the user's role from the data storage component 105.

The data processing component 101 then processes the retrieved information to generate a clear and actionable view of the risk factors and other contextual information that is relevant to the user's role and organizational objectives.

The user interface 103 then displays the processed information, at 311, including the user's role, list of risk factors, objectives, and any other relevant context in a graphical or tabulated format. Typically, the user interface 103 provides necessary navigation options and tools for the user to explore and interact with the displayed information. Preferably, the Specialized Tool 100 is capable of guiding the user through the displayed information, offering explanations or tooltips to clarify specific elements, as needed.

The Specialized Tool 100 allows the user to proceed to the next step of identifying and inputting risk descriptions, at 313, once the user has a clear understanding of the existing risk factors as displayed, and the user's role within the organization's risk management process.

## The user identifies and inputs risk descriptions into the system using the Specialized Tool

The user interface 103 presents an input form for the user to enter a description of a risk that the user has identified in the user's manufacturing plant or organization, at 313. Based on the user's role and expertise, the user identifies risk factors relevant to the organization and its objectives, and records the identified risks into the provided form, including a brief description of the identified risk. The goal is to provide enough information to allow the identified risk to be understood and assessed by non-experts. The Specialized Tool 100 can then allow for ongoing refinement of the risk descriptions as needed, at 319, at 321.

Before inputting any risk description, the user is expected to review descriptions of existing risk factors on the graphical user interface 103, at 311, to avoid duplicating already identified risk factors. If a risk factor has already been identified and documented, the user should review the existing risk description instead, and consider updating or modifying the risk description, based on new information that the user intends to input into the system, at 313.

Optionally, the user can provide additional information, such as potential impacts, likelihood, and existing mitigation measures, to further describe and contextualize each identified risk factor. The user can edit, delete, or modify the recorded risk factors as may be necessary. Preferably, the user should ensure that the input is consistent with the organization's risk management guidelines and policies.

Finally, the user submits newly recorded or newly amended risk factor data to the data processing component 101 for analysis, at 319. The Specialized Tool 100 provides the user with feedback on the successful submission and integration of the newly identified risk factors into the data storage component 105.

If needed, the user can repeat the risk factor identification and input process to add more risk factors, update existing risk factors, or remove risk factors that are no longer relevant to the organization.

Accordingly, the Specialized Tool 100 processes and integrates any newly recorded risk factors into the existing risk factors within the data storage component 105. The Specialized Tool 100 then refreshes the display with updated risk factors, showing the newly added risk factors, ensuring that the user has access to the most up-to-date and comprehensive risk factors.

The Specialized Tool 100 can also prompt the user to review and update the identified risk factors periodically, to ensure that the recorded risk factors remain accurate and relevant to the organization or process.

Preferably, the Specialized Tool 100 may save the user's input data in real-time or at regular intervals to minimize the possibility of data loss, and to ensure that the user's work is captured within the data storage component 105 securely.

## Comparing and ordering risk factors across multiple dimensions

However, in order for the Specialized Tool 100 to provide guidance to the user in prioritizing the identified risk factors across multiple dimensions, the Specialized Tool 100 presents a manageable subset of the identified risk factors for the user to compares and arranges risk factor records across multiple dimensions (the risk ordering method 207). Examples of dimensions may include likelihood, impact, or other relevant factors specific to the organization or industry.

Each dimension has its own set of order of risk factors (risk orders), representing the relative prioritization of the identified risk factors within that specific dimension. This approach is adopted because requiring users to simultaneously consider and prioritize risk factors across multiple dimensions can be overly complex and cognitively demanding. By evaluating risk factors independently within each dimension, users can focus on one aspect or factor at a time, enabling more accurate and informed judgments about the relative priority of risk factors in that particular dimension.

In operation, the data processing component 101 retrieves the identified risk factors and risk order sets from the data storage component 105, and organizes them for comparison and prioritization along each dimension independently. The data processing component 101 then consolidates the risk order sets from different users, taking into account their roles, expertise, and any other relevant factors. The consolidated information is used to generate a combined set of risk orders for further processing.

In order for the Specialized Tool 100 to prioritize or arrange the identified risks and display the risk orders on the user interface 103, the tool requires information regarding the relative order of different identified risks, such as A < B or A < B < C. The term "risk order" refers to any instruction that represents a relative order of risk factors, for example, A < B or A < B < C, where A, B, and C are identified risk factors.

The objective of the data processing component 101 is to order the set of identified risk factors relevant to the user according to a given set of order instructions for each dimension.

The data processing component 101 may encounter issues where the set of order instructions at any given time may not be sufficient to completely determine the order of the risk factors with in the set, or where conflicting or duplicating orders exist, at 303. The component will need to handle such scenarios and make the best possible determination of the relative order of risk factors along each dimension. One convenient way to process the set of order instructions is to convert them into a graph. A graph is a data structure that represents a set of objects and the relationships between them.

In such a graph, the risk factors are represented as nodes, and the order instructions as directed edges connecting the nodes in a graph. The graph can be constructed by creating a node for each risk factor and connecting them with edges based on the given order instructions.

For example, as shown in Figure 3b for a simple set of instructions [A < B, A < C, B < C], there will be two edges connected to node A (A -> B, A -> C) and one edge connected to node B (B -> C). By converting the set of order instructions into a graph, the data processing component 101 can more easily identify and resolve any conflicting order instructions.

The data processing component 101 resolves conflicting order instructions by identifying cycles in the graph and removing the least reliable instruction. A cycle in a graph is a sequence of nodes and edges that starts and ends at the same node, representing a conflict in the risk orders. For example, if the graph contains the instructions A < B, B < C, and C < A, there is a cycle (A < B < C < A) that represents a conflicting in the risk orders. To resolve conflicts, the data processing component 101 identifies cycles within the graph. Various cycle detection algorithms can be used for this purpose, such as depth-first search (DFS) algorithm. Once a cycle is identified, the data processing component 101 determines which edge or edges within the cycle are the least reliable, based on factors such as the consensus level, expert opinions, or the time relevance of the information.

The data processing component 101 removes the least reliable edge(s) from the cycle, breaking the conflict and allowing for a consistent set of risk order. The data processing component 101 repeats the cycle detection and conflict resolution process until no more cycles are found, ensuring a consistent set of risk order for each dimension.

Figure 3c shows another example of how the cycle A < B < C < A would be resolved and the resulting order under two different scenarios.

The data processing component 101 also keeps track of risk factors where the order between certain risk factors is undetermined.

Nodes with more than one child or parent indicate that the relative order of certain risk factors has not yet been determined. For example, consider the following risk order instructions: A > C > D and A > B > D. In this case, the relative order of risk factors C and B is ambiguous.

Nodes that have not been included in any instructions means that the relative order of these risk factors has not yet been determined.

The data processing component 101 determine the final set of risk order for each dimension in the following way. Once all cycles are resolved and a consistent set of risk order is established, the data processing component 101 determines the final order of the risk factors by topologically sorting the graph. Topological sorting is an algorithm that provides a linear ordering of the nodes in a directed graph, such that for every edge (u, v), node u comes before node v in the ordering. The topological sort generates the final order of the risk factors for each dimension, which represents the relative ranking of the risk factors along that dimension. The user interface 103 presents the final order of the risk factors to the user in a clear and actionable format, such as a ranked list, a visual representation, or a combination of both.

Accordingly, the Specialized Tool 100 could save the prioritization results, including the final order of the risk factors for each dimension, any changes made during the process, and the user's inputs, in the data storage component 105.

### Classifying risk according to the classification of anchor risks using the associative properties of the risk orders

The Specialized Tool 100 classifies or groups risk factors using a unique approach known as the risk classification method 209. This method involves classifying non-anchor risks based on the classification of "anchor risks". The tool uses associative properties of risk orders at 305 to implement this classification.

Anchor risks are a subset of risk factors that users identify as key reference points based on their personal knowledge and experience in the manufacturing or business processes. These anchor risks serve as a basis for classifying other risk factors, or non-anchor risks, in the system.

Risk rating is a numerical or categorical value assigned to a risk factor based on its relative importance and potential impact on the organization. The risk rating is determined by considering factors such as likelihood, impact, and existing mitigation measures. In the context of the Specialized Tool 100, risk ratings are derived from the order of risk factors.

For instance, let's consider that we have an ordered set of risk factors A, B, C and D. Suppose the order from least to most likelihood is [A, B, C, D], and the order from least to most impact is [A, C, D, B].

The risk rating for each factor could then be calculated by multiplying the factor's position in each ordering. The position represents the relative rank of the factor in terms of likelihood and impact. So, the risk ratings would be:

$$A = 1 \text{ (position in likelihood)} * 1 \text{ (position in impact)} = 1$$

$$B = 2 * 4 = 8$$

$$C = 3 * 2 = 6$$

$$D = 4 * 3 = 12$$

These risk ratings quantify the relative importance and potential impact of each risk factor.

The Specialized Tool 100 user interface 103 allows users to create and define action groups for managing risk factors, such as "Do nothing," "Monitor for change," or "Take actions to reduce risk." These action groups inform users which of the risk factors require specific actions or attention.

The risk classification method 209 utilizes the associative properties of the order of the risk factors to classify non-anchor risks, at 307, based on the action groups of anchor risks. By leveraging the associative properties of the order of the risk factors, the tool can infer the appropriate action group for a non-anchor risk based on the action group of related anchor risks.

To illustrate this, consider a business scenario where there is a set of risk factors [A, B, C, D, E, F, G] with corresponding risk ratings as [1, 8, 6, 12, 7, 9, 4] respectively. Suppose the business identifies B, C, and F as anchor risks based on their understanding and knowledge of the operations and market.

Next, the business categorizes these anchor risks into action groups as follows:

Risk B (Rating = 8) as "Monitor for change"
Risk C (Rating = 6) as "Do nothing"
Risk F (Rating = 9) as "Take actions to reduce risk"

With these anchor risks and their associated action groups, the Specialized Tool 100 can classify the non-anchor risks [A, D, E, G] based on their risk ratings and the associative properties of risk orders. Here's how:

Risk A (Rating = 1) can be classified into the "Do nothing" group since its risk rating is lower than the anchor risk B.
Risk D (Rating = 12) would be assigned to the "Take actions to reduce risk" group as its rating is higher than that of Risk F.
Risk E (Rating = 7) could be classified into either the "Monitor for change" or "Do nothing" group due to its rating falling between those of anchor Risks B and C. However, for prudence, the system classifies it as "Monitor for change".
Risk G (Rating = 4) would be placed in the "Do nothing" group as its rating is lower than both Risk B and Risk F.

This way, by using the associative properties of risk orders, the Specialized Tool 100 can classify non-anchor risks based on the action groups of the anchor risks. This feature can be of great assistance to users, helping them efficiently categorize risks and thus prioritize their risk management strategies.

The Specialized Tool 100 consolidates user inputs from the categorization survey and refines the action group accordingly. In case of conflicting inputs, the Specialized Tool 100 uses a consensus-based approach, taking into account the majority opinion, or gives preference to inputs from users with greater expertise or higher organizational standing, thereby ensuring that the most reliable and informed perspectives are considered in the action group assignments.

The user interface 103 presents the classified risk factors in a clear and actionable format, such as a visual representation or a tabulated list. Users can review the action groups and the risk factors within each group, providing a comprehensive view of the organization's risk landscape and facilitating informed decision-making.

The Specialized Tool 100 collects user feedback on the classification of risk factors based on the action groups of anchor risks. The feedback can be used to refine and improve the classification of risk factors process.

**User Feedback to Identify Risk Factors**

The Specialized Tool 100 collects and processes feedback from users to refine the relative order of existing risk factors, using surveys issued to users across the different dimensions.

Typically, the Specialized Tool 100 selects a subset of risk factors from the available risk factors and adds the subset of risk factors to a survey. Risk factors that have undetermined or ambiguous orders may be prioritized for inclusion in the survey. Other factors may consider for priority of inclusion into the survey, such as relevance of risk factors to the user's role, the organization's objectives, and time lapse since the last review.

The survey may use various formats, such as pairwise comparisons, ranking exercises, or rating scales, depending on the organization's preferences and the complexity of the risk factors.

The Specialized Tool 100 distributes the survey to users with relevant roles and expertise within the organizations. Selection of users for the survey may be initiated by the users themselves or by the Specialized Tool 100, based on predefined criteria or algorithms that identify users with relevant expertise and knowledge.

Upon receiving the survey, the users complete the survey, providing their input on the relative order of the selected risk factors. Preferably, the survey is provided on a website fielding the survey questions. Subsequently, the Specialized Tool 100 collects and updates the risk orders and related information to the data storage component 105 based on the survey results without consolidating the inputs. The updated risk orders and related information are stored in the data storage component 105 to be processed, as described earlier, at a later time.

The Specialized Tool 100 may periodically repeat the survey process to ensure that the risk orders and related information remain up-to-date and relevant to the organizations evolve and grow.

## Feedback from users to categorize risk factors by follow-up action

Furthermore, the Specialized Tool 100 collects and processes feedback from users to categorize risk factors, based on their acceptability and required actions for addressing the risk factors. The survey is designed to enable a selected group of users to evaluate identified risk factors and assign the risk factors to different action groups, based on the level of each risk factor.

To obtain relevant feedback, the Specialized Tool 100 distributes the categorization survey to users with relevant roles and expertise within the organization. However, the selection of users for the survey may be initiated by the users themselves, or selection of users may be done by the Specialized Tool 100, based on predefined criteria or algorithms that identify users with relevant expertise and knowledge. The users then provide input on categorization of certain risk factors based on their understanding of the risk factors and the organization's objectives, policies, and guidelines.

The Specialized Tool 100 then updates the risk factor information in the data storage component 105, adding the categorization information to each risk factor, and saves the risk factor categorization results, including any changes made during the process and the user's inputs, for future reference and analysis.

## Generating a risk register with the latest risk factors, risk orders and action groups.

The Specialized Tool 100 then generates a risk register with the latest risk factors, risk orders and action groups.

The system comprises a comprehensive risk factor register, which is generated each time the data is updated 319, 321. The register includes the identified risk factors, the latest order of the risk factors, the corresponding action groups, and includes associated information.

Notably, the risk register includes the identification of "risk owners". Risk owners are the individuals or entities that have been assigned the responsibility for managing a specific risk. This typically includes overseeing the implementation of risk mitigation strategies, monitoring the risk over time, and responding effectively if the risk materializes. They are generally the people who are most directly exposed to, or capable of managing, the specific risk factors.

The risk register can be exported in various formats, such as spreadsheets or PDF files, for easy sharing and collaboration among stakeholders within the organization.

The risk register serves as a valuable tool for communication, decision-making, and resource allocation, helping the organization to focus on the most significant risk factors and take appropriate action to manage them effectively.

## Examples of the graphical user interface

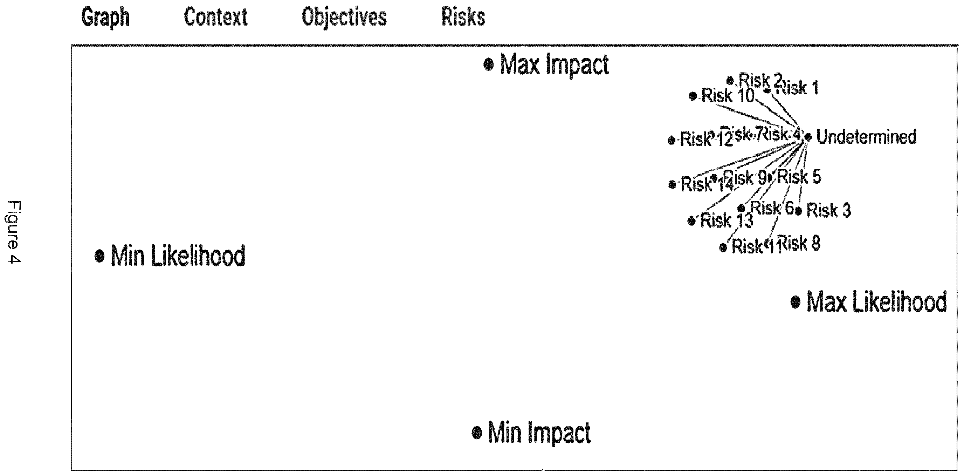

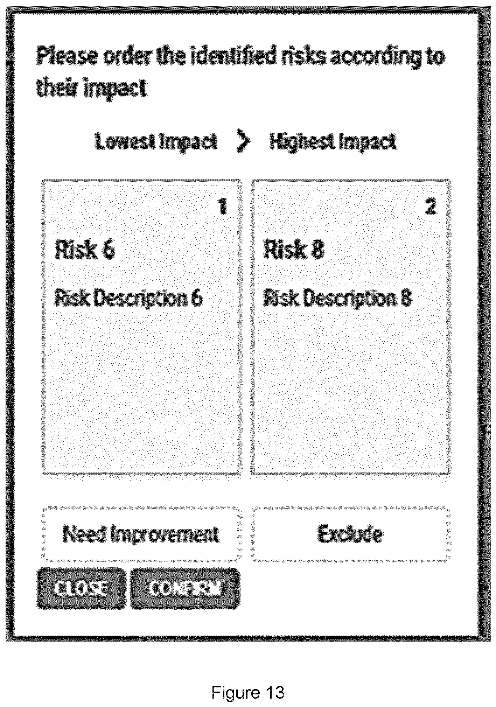

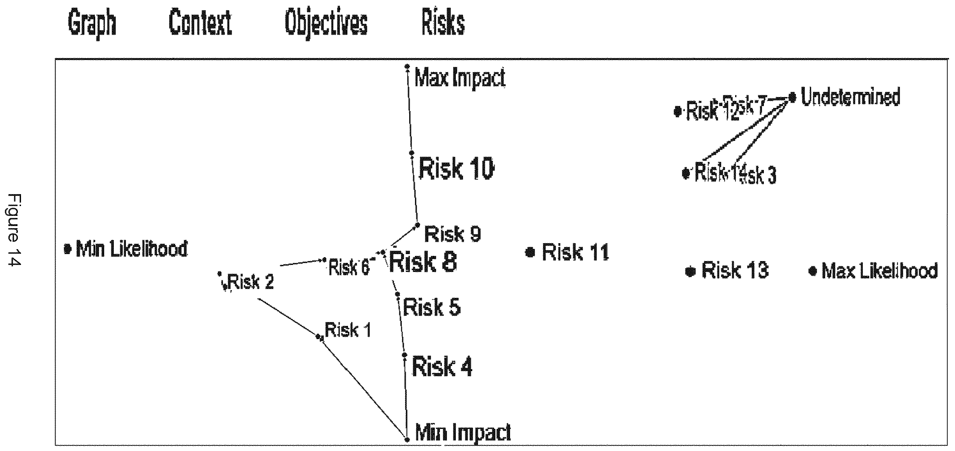

In a preferred embodiment, as illustrated in Figure 4 to Figure 16, the Specialized Tool provide an interactive graphical user interface that allows the user to arrange risk factors in relative positions that illustrate each risk factor's impact on the operation or process that is being monitored (arranging the risk factors for the dimension "impact"). In other embodiments, however, a different graphical user interface may be used.

As mentioned above, the user is someone who has sufficient experience in the operation or process of the business or manufacturing plant, and the user is able to identify the more impacting risk factors and the less impacting risk factors, among all known risk factors of the operation or process. Furthermore, the user is able to identify which of the risk factors are almost certain to happen, and which are less likely to happen.

For example, in a manufacturing plant producing shoes, it is rather unlikely that raw material leather will be undersupplied due to the current amount of cattle and the availability of tanneries. However, a stoppage of leather supply will stop the entire production. Hence, such a risk factor is unlikely to happen but highly impactful should this risk factor happen.

When using the Specialized Tool for the first time, a set of risk factors may be automatically provided by the Specialized Tool based on well-known information relating to the user's industry. The user may enter new risk factors as may be fitting. Figure 4 shows the graphical user interface of the Specialized Tool at an initiation stage.

The graphical user interface provides a canvas for the different risk factors (specific names of each risk factor will be shown in the graphical user interface in a real Specialized Tool), to be dragged to any position on the canvas.

The canvas is defined by four sides, as in a rectangle. Each side of the rectangle represents a certain characteristic that may be found in any risk factor. The top side represents maximum impact on the operation of the process (i.e. the dimension is "impact"). The bottom side represents minimum impact on the operation of the process. The right side represents maximum likelihood of the risk factor happening in the operation of the process. The left side represents maximum likelihood of the risk factor happening in the operation of the process. In other words, the canvas is made of two axes. The horizontal axis shows minimum to maximum likelihood of happening or occurrence from left to right. The vertical axis shows minimum to maximum impact from bottom to top.

If a certain risk factor has maximum likelihood of happening, i.e. certainty = 1, the user should drag the risk factor to the extreme right of the canvas, touching the border on the right side of the canvas (arranging the risk factors for the dimension "certainty"). If the same risk factor has a minimum impact on the operation or process, the user should also drag the risk factor to the border at the bottom or base of the canvas.

If a certain risk factor has minimum likelihood of happening, i.e. certainty = 0, the user should drag the risk factor to the extreme left of the canvas, touching the border on the left side of the canvas. If the same risk factor has a maximum impact on the operation or process, the user should also drag the risk factor to the border at the top of the canvas.

If a certain risk factor has mean likelihood of happening, i.e. certainty = 0.5, the user should drag the risk factor to the centre between the left and right sides of the canvas. If the same risk factor has a mean or average impact on the operation or process, the user should also drag the risk factor to the centre between the top and bottom of the canvas.

In the example of a shoe manufacturing plant discussed, the risk factor of supply shortage of raw leather material should be at the top of the vertical axis and at the leftmost of the horizontal axis.

Every risk factor may therefore be arranged graphically according to the two axes, and the positions of the risk factors relative to each other would inform anyone reading the canvas of the relative impact and certainty of all the risk factors.

As previously mentioned, the use of the Specialized Tool 100 via its graphical user interface begins with a disordered list of risk factors, as shown in Figure 4. This initial display positions a group of risk factors together in the top right corner of the canvas, all overlapping in their initiation position.

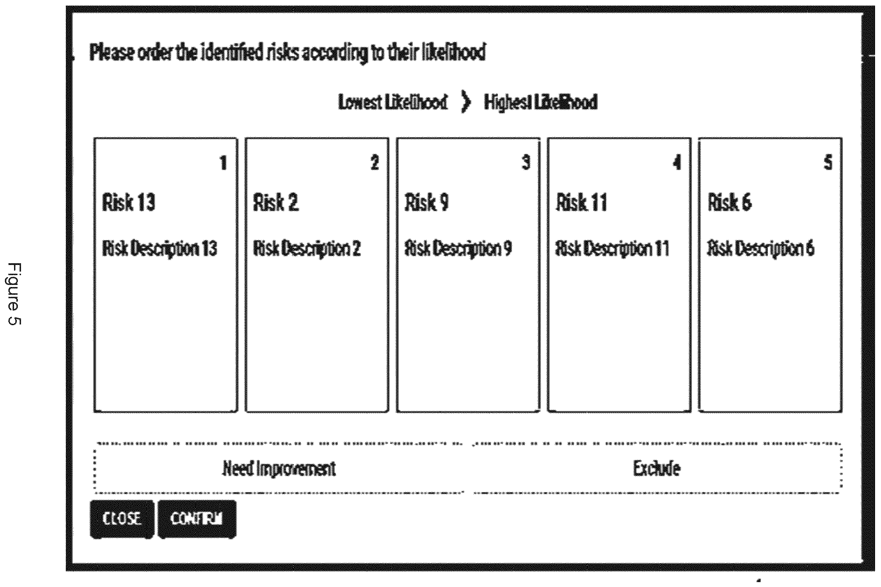

Upon initiation of the risk comparison input method at 205, from the disordered set of risk factors, the Specialized Tool 100 then randomly selects a subset to display on the graphical user interface. Each risk factor is represented by a textbox, randomly positioned on the screen as shown in Figure 5. For illustration purposes, these factors are labelled as Risk 13, Risk 2, Risk 9, Risk 11, and Risk 6.

It's important to note that the labels "Risk 13", "Risk 2", and so on, are simply placeholders for the purposes of this explanation. In a real-world application of the tool, these boxes will contain the specific descriptions of the risk factors, thereby providing users with meaningful and detailed information that they can use to order the risk factors appropriately.

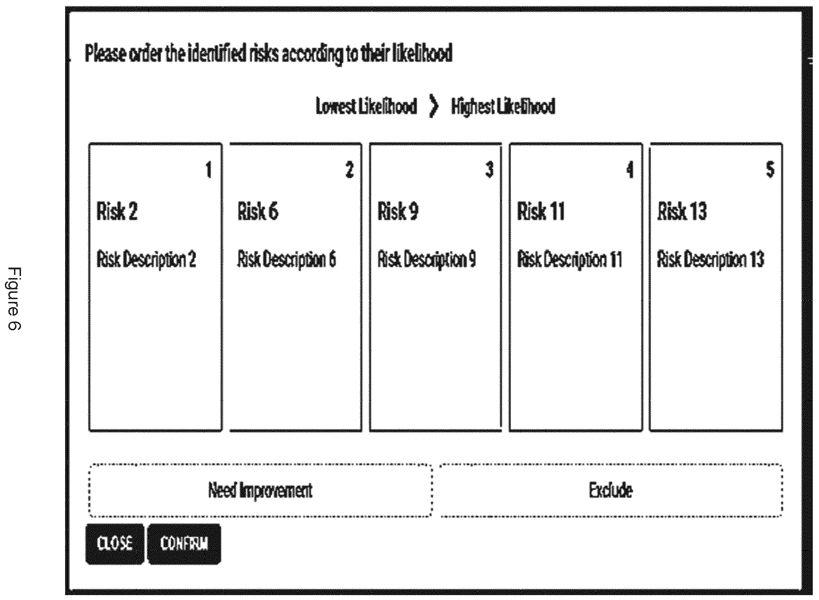

Subsequently, as illustrated in Figure 6, the user may use the graphical user interface to move and re-arrange the textboxes, into an order of likelihood of occurrence. This re-arrangement is based on the user's perception entirely, and therefore drawing on the user's experience. Figure 6 shows a re-arrangement of the risk factors in the order of Risk 2, Risk 6, Risk 9, Risk 11 and Risk 13.

While Figure 5 and 6 show the rearrangement of five risk factors for simplicity and due to illustration space constraints, the actual number of risk factors a user can prioritize at a time may vary. This flexibility depends on the user's capability and the space available on the user interface.

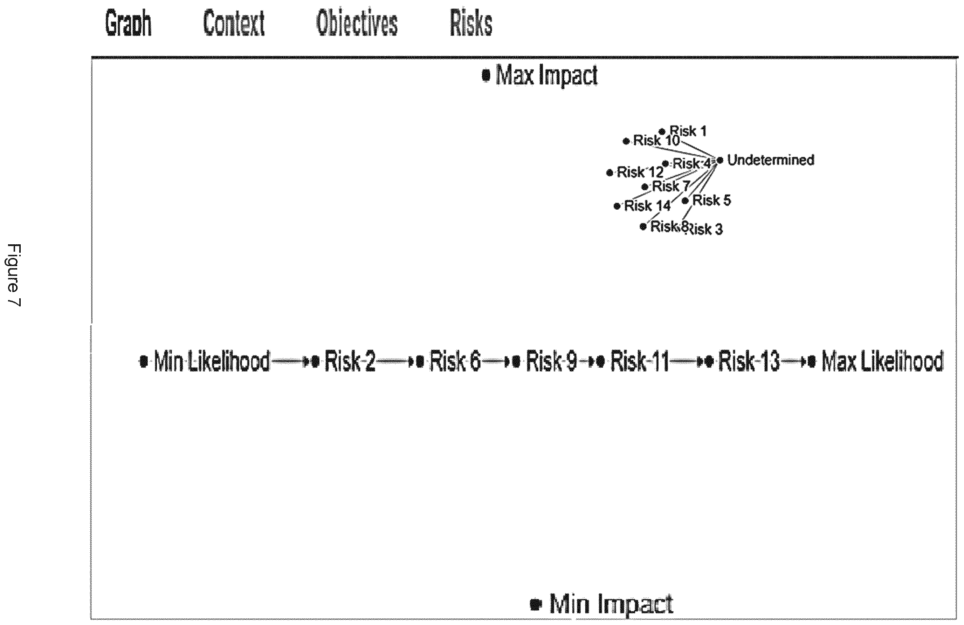

After users have arranged the risk factors, the Specialized Tool 100 re-ranks them, as shown in Figure 7, which presents the risk factors along the horizontal axis in the form of nodes. Each risk factor is represented by a node, and the nodes are arranged in the order determined by the user, connected by lines.

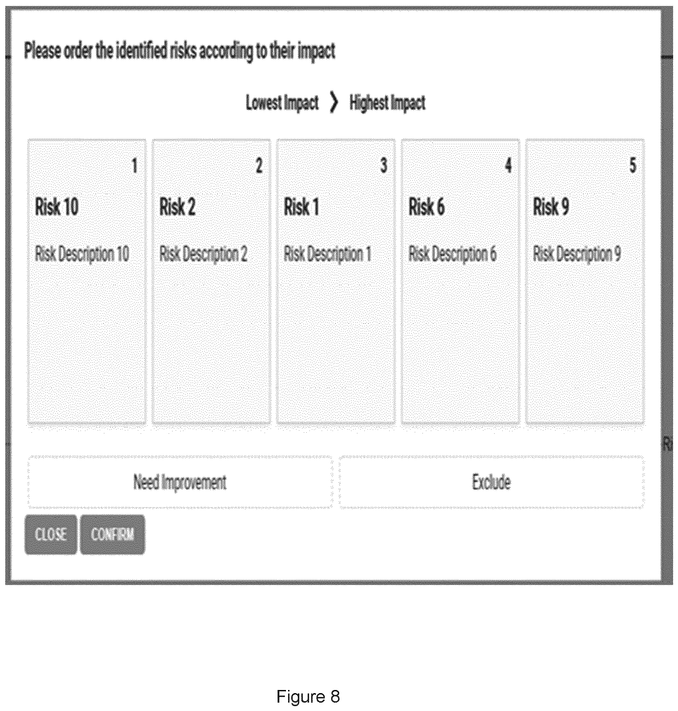

Building on the previous steps, the Specialized Tool 100 will present another randomly selected subset of risk factors, as illustrated in Figure 8. This set includes Risk 10, Risk 2, Risk 1, Risk 6, and Risk 9, each represented by a movable textbox within the graphical user interface.

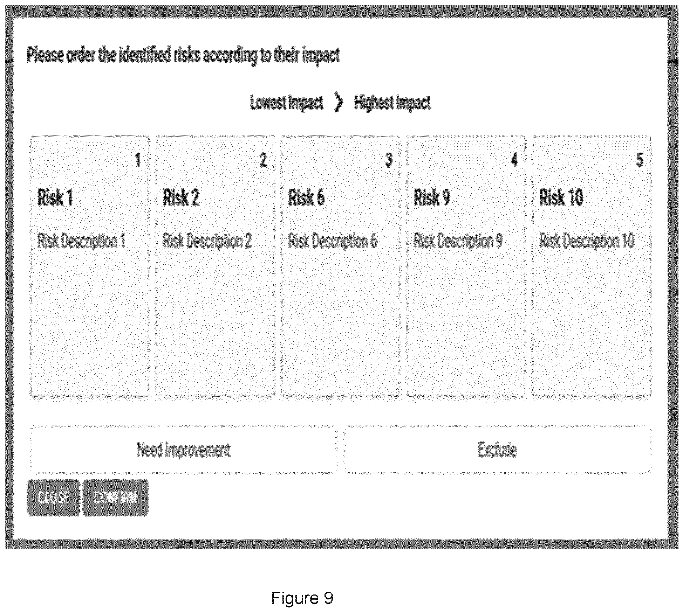

Subsequent to the user's rearrangement, the risk factors are ordered based on their assessed impact. For instance, as shown in Figure 9, the user may determine the order to be Risk 1, Risk 2, Risk 6, Risk 9, and Risk 10.

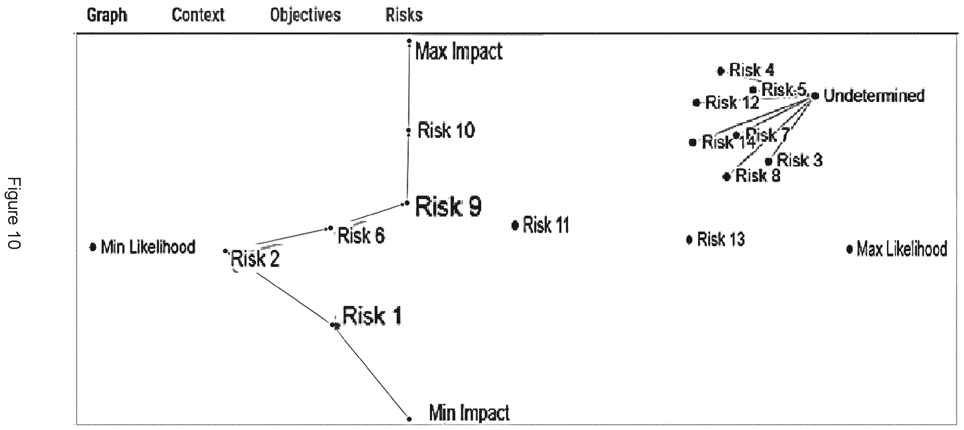

Once the user's impact assessment is complete, the Specialized Tool 100 arranges these risk factors in accordance with the user's input. It then generates a graphical representation of the relationships between these risk factors. As depicted in Figure 10, this graph is presented along the vertical axis, further visualizing the hierarchy of risk factors based on their potential impacts.

As may be seen in Figure 10, the combined assessment of both the likelihood of occurrence and the extent of impact of each risk factor determines their relative position on the canvas. Some risk factors are positioned more to the left or right, while others are arranged closer to the top or bottom, indicating their differing degrees of likelihood and impact.

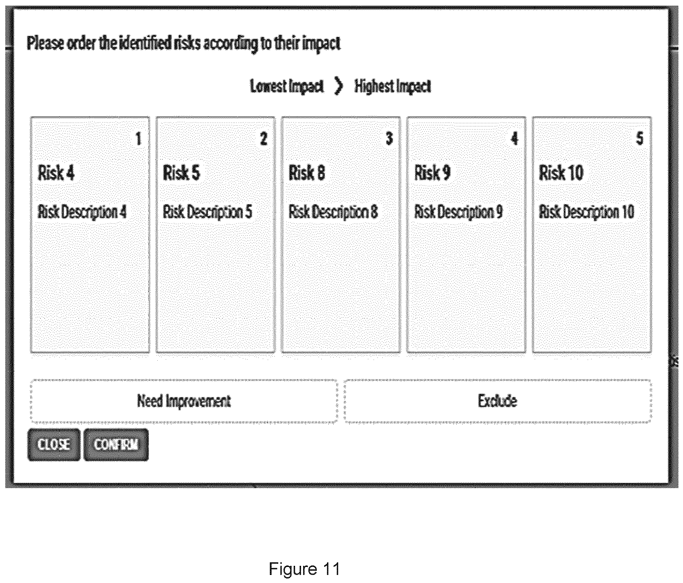

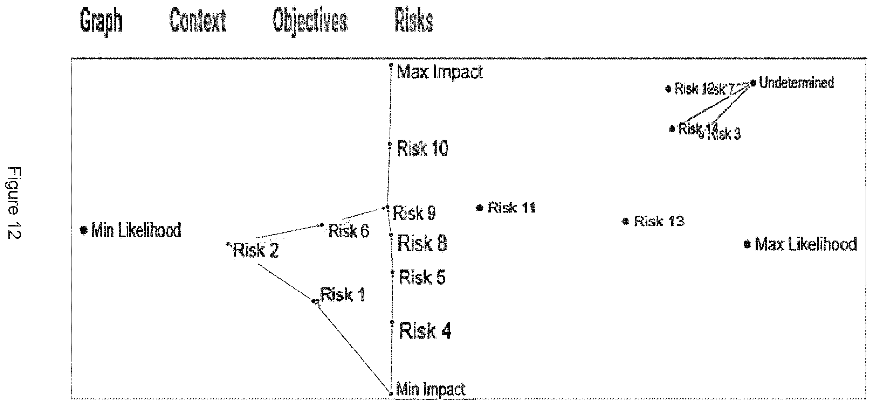

In Figure 11, the Specialized Tool generates another subset of risk factors for impact-based ordering. This new set includes risk factors that weren't displayed in Figure 9. Upon the user's rearrangement, as demonstrated in Figure 12, a branch split emerges, signifying an unresolved priority between Risk Factor 6 and Risk Factor 8.

To address this ambiguity, the Specialized Tool, through the graphical user interface, requests the user to assign a clear priority between Risk Factor 6 and Risk Factor 8. Following the user's decision, the priority conflict between Risk Factor 6 and Risk Factor 8 gets resolved.

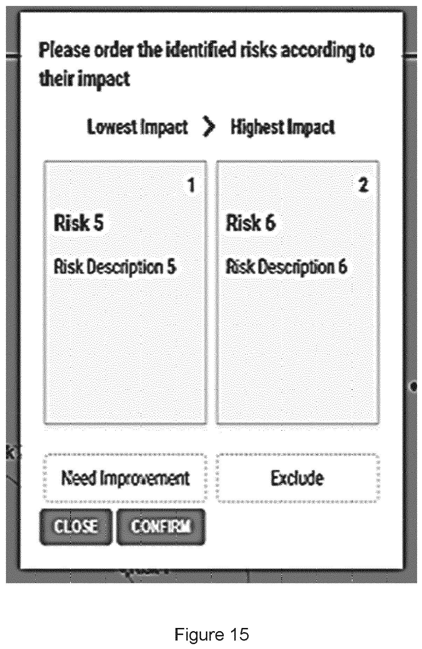

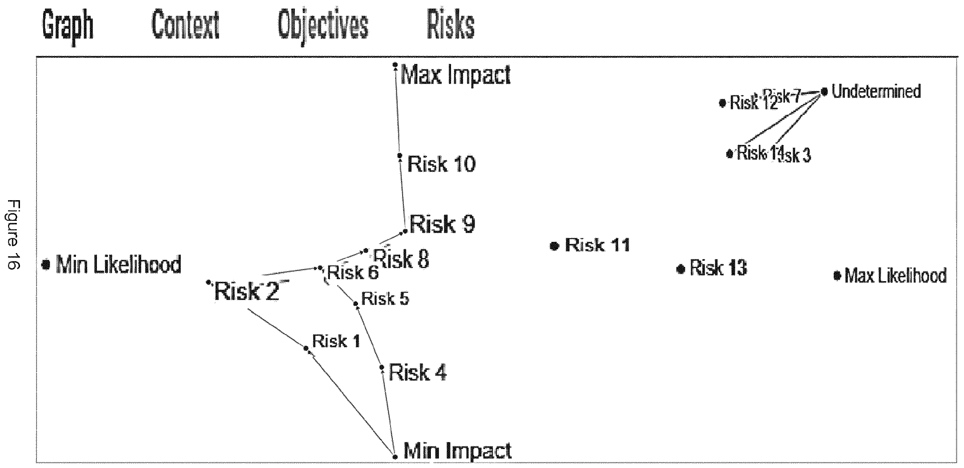

If there are additional risk factors with competing priorities, the Specialized Tool would similarly prompt the user to differentiate these risk factors, as illustrated in Figure 15. This process iterates until all conflicts in priorities are resolved. Figure 16 showcases the Specialized Tool displaying an updated sequence of the risk factor priorities after the user's clarification.

While the foregoing description outlines preferred embodiments of the present invention, it will be understood by those skilled in the technology concerned that many variations or modifications in details of design, construction or operation may be made without departing from the scope and spirit of the present invention as claimed.

## Claims

1. - A method of prioritising risk factors in a production process, manufacturing process or electronic financial process, comprising the steps of:

   retrieving risk factors from a data storage component;
   presenting a subset of these risk factors to a user on a user-interactive display;
   enabling the user to arrange the risk factors in the subset according to perceived priority, thereby establishing a relative priority within the subset;
   aggregating the user-guided prioritizations across multiple subsets to establish an overall prioritization of risk factors for the process.

2. - The method of claim 1, further comprising the steps of:

   obtaining contextual information from different users, the contextual information including the role, expertise, and other relevant factors of each user, which may help the system to determine the risks factors to be displayed to the user, assess the credibility of the information provided by each user, and perform other functions;
   storing this contextual information into the data storage component.

3. - The method of claim 1, further comprising the steps of:

   selecting a sub-set of the risk factor as anchor risk factors;
   assigning action groups to the anchor risk factors

4. - The method of claim 3, further comprising the steps of:
   classifying non-anchor risk factors based on the most similar anchor risk factors.

5. - The method of claim 1, further comprising the steps of:

   obtaining user feedback;
   updating risk factor priorities and action groups based on the feedback.

6. - The method of claim 1, further comprising the steps of:
   generating a risk register with the latest risk order and action groups.

7. - A system comprising

   1) a data processing component;
   2) a user interface for user input; and
   3) a data storage component;

the data processing component configured to carried out the steps in claim 1 to 6.

100

105

101

Data Processing
Component

103

Figure 1

Figure 2

**Dynamic Risk Prioritization and Classification System: Functional Block Diagram**

- 211 User Authentication & Context Retrieval
- Data Processing Component 101
- Data Storage Component 105
- Risk Ordering Method 207
- Risk Classification Method 209
- Processing and Storage
- 201 User Display
- 203 Risk Identification Input
- 205 Risk Comparison Input Method
- User Interfaces 103

Legend
- Generic Component
- Unique to Invention

# Dynamic Risk Prioritization and Classification System Process Flow

**Legend**

| Generic Component |
|---|

| Unique to Invention |
|---|

**Start**

301 Authenticate User & Retrieve Context

**Data Processing Component**

303 Generate Risk Order & Resolve Conflicts

305 Classify Risks Based on Anchor Risks

307 Identify Undetermined Risk Order

309 Prioritization Information Request / Update

**User Interface & Inputs**

311 Display Risk Information & User Context

313 Identify & Input Risks

315 Risk Order Survey

**Data Storage**

317 Retrieve Information

319 Update

321 Update

Figure 3a

EP 4 475 053 A1

14

Figure 3b

Figure 3c

Graph    Context    Objectives    Risks

● Max Impact

● Risk 2 ●Risk 1
● Risk 10

●Risk 12 ●sk 7 Risk 4 ● Undetermined

●Risk 14 ● Risk 9 ● Risk 5

● Risk 6 ● Risk 3

● Risk 13

● Risk 1 Risk 8

● Min Likelihood

● Max Likelihood

● Min Impact

Figure 4

Figure 5

Figure 6

Figure 7

Please order the identified risks according to their impact

Lowest Impact ⟩ Highest Impact

| 1 | 2 | 3 | 4 | 5 |
|---|---|---|---|---|
| **Risk 10** | **Risk 2** | **Risk 1** | **Risk 6** | **Risk 9** |
| Risk Description 10 | Risk Description 2 | Risk Description 1 | Risk Description 6 | Risk Description 9 |

Need Improvement

Exclude

CLOSE   CONFIRM

Figure 8

Please order the identified risks according to their impact

Lowest Impact ❯ Highest Impact

| 1 | 2 | 3 | 4 | 5 |
|---|---|---|---|---|
| **Risk 1** | **Risk 2** | **Risk 6** | **Risk 9** | **Risk 10** |
| Risk Description 1 | Risk Description 2 | Risk Description 6 | Risk Description 9 | Risk Description 10 |

Need Improvement

Exclude

CLOSE  CONFIRM

Figure 9

Figure 10

Please order the identified risks according to their impact

Lowest Impact ⟩ Highest Impact

| 1 | 2 | 3 | 4 | 5 |
|---|---|---|---|---|
| **Risk 4** | **Risk 5** | **Risk 8** | **Risk 9** | **Risk 10** |
| Risk Description 4 | Risk Description 5 | Risk Description 8 | Risk Description 9 | Risk Description 10 |

Need Improvement

Exclude

CLOSE  CONFIRM

Figure 11

Figure 12

**Please order the identified risks according to their impact**

Lowest Impact  >  Highest Impact

| | 1 | | 2 |
|---|---|---|---|
| **Risk 6** | | **Risk 8** | |
| Risk Description 6 | | Risk Description 8 | |

Need Improvement

Exclude

CLOSE  CONFIRM

Figure 13

Figure 14

Figure 15

Figure 16

Europäisches
Patentamt
European
Patent Office
Office européen
des brevets

# EUROPEAN SEARCH REPORT

Application Number

EP 23 20 1619

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/293961 A1 (YOUNGER CHRISTOPHER JON [US]) 17 September 2020 (2020-09-17) * figures 1-8B * * paragraphs [0011] - [0021], [0042] - [0092] * | 1-7 | INV. G06Q10/0635 G06Q40/06 |
| A | US 2014/188765 A1 (FORSYTHE ARIC [US]) 3 July 2014 (2014-07-03) * paragraphs [0026], [0027], [0033] * | 1-7 | |

TECHNICAL FIELDS
SEARCHED      (IPC)

G06Q

The present search report has been drawn up for all claims

| Place of search | Date of completion of the search | Examiner |
|---|---|---|
| The Hague | 10 November 2023 | Meijs, Koen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 1619

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2023

| Patent document cited in search report | | Publication date | Patent family member(s) | | Publication date |
|---|---|---|---|---|---|
| US 2020293961 | A1 | 17-09-2020 | US 2020293961 A1 | | 17-09-2020 |
| | | | US 2023019263 A1 | | 19-01-2023 |
| US 2014188765 | A1 | 03-07-2014 | US 8706597 B1 | | 22-04-2014 |
| | | | US 2014188765 A1 | | 03-07-2014 |